# EUROPEAN PATENT APPLICATION

(11) **EP 2 704 381 A1**
(43) Date of publication of application: **05.03.2014**
(21) Application number: 13181158.0
(22) Date of filing: 21.08.2013
(51) Int. Cl.: H04L 12/863

(54) **Queue control in a memory**

(30) Priority: 28.08.2012 JP 2012187479
(71) Applicant: FUJITSU LIMITED, Kawasaki-shi, Kanagawa 211-8588 (JP)
(72) Inventor: Osonoi, Takeshi, Kanagawa, 211-8588 (JP)
(74) Representative: HOFFMANN EITLE

(57) **Abstract**

A control apparatus (1) controls the transmission of data from a transmission apparatus (21) to a reception apparatus (31). The control apparatus (1) includes: a first comparison unit (3) that compares first information indicating a free space of a buffer (23) included in the reception apparatus (31) with second information indicating the size of data to be transmitted; a second comparison unit (4) that compares the first information with third information obtained by adding a predetermined value to the second information; and a control unit (5) that outputs a data output control signal based on the comparison result from the second comparison unit (4) after the transmission of the data until the end of update of the first information, and outputs a data output control signal based on the comparison result from the first comparison unit (3) after the update of the first information.

## Description

### FIELD

The embodiments discussed herein are directed to a control apparatus, a transmission apparatus, and a control method.

### BACKGROUND

In communications employing a packet exchange system, a credit scheme is known as a manner for avoiding overflow of a queue (buffer) at a receiver.

In the credit scheme, the receiver monitors the free space of its own queue (receiver queue) and notifies a transmitter of a value (this value is called a credit value or a credit) indicating the free space of the receiver queue. Meanwhile, the transmitter restricts the data volume of a continuously transmitted packet to be equal to or less than the credit value.

In this manner, the transmitter subtracts a value corresponding to a transmitted packet from the credit value every transmission time of the packet, and stops the transmission of a packet if the credit value is less than the data volume of a packet on a transmission waiting queue. This prevents continuous transmission of the packet exceeding the free space of the queue at the receiver (receiver queue) from causing the overflow of the receiver queue.

Here, the term "credit value" refers to the data volume of a receivable packet. The upper limit of this credit value is determined from the free space of the receiver queue.

In this scheme, the transmitter cannot transmit a new packet immediately after the start of transmission of a packet until the end of update of a credit value.

As a result, when packets are continuously transmitted for a time shorter than a time required for update of the credit value, some packet cannot be transmitted in a certain period immediately after the reception of a packet. This leads to deterioration of latency.

### SUMMARY

It is an object of one aspect of the disclosure to prevent unauthorized use in an authentication system.

It is another object of the present invention to provide advantageous effects achieved by each configuration described in embodiments of the disclosure and not attained by conventional techniques.

One aspect of the present invention provides a control apparatus for controlling the transmission of data from a transmission apparatus to a reception apparatus. The control apparatus includes: a first comparison unit that compares first information indicating a free space of a buffer included in the reception apparatus with second information indicating the size of data to be transmitted; a second comparison unit that compares the first information with third information obtained by adding a predetermined value to the second information; and a control unit that outputs a data output control signal based on a comparison result from the second comparison unit after the transmission of the data until the end of update of the first information, and outputs a data output control signal based on a comparison result from the first comparison unit after the update of the first information.

Another aspect of the present invention provides a transmission apparatus for transmitting data to a reception apparatus. The transmission apparatus includes: a first buffer that stores data to be transmitted to the reception apparatus; a first comparison unit that compares first information indicating a free space of a second buffer included in the reception apparatus with second information indicating the size of the data to be transmitted; a second comparison unit that compares the first information with third information obtained by adding a predetermined value to the second information; and a control unit that outputs a data output control signal based on a comparison result from the second comparison unit after the transmission of the data until the end of update of the first information, and outputs a data output control signal based on a comparison result from the first comparison unit after the update of the first information. In the transmission apparatus, the first buffer transmits the data stored in the first buffer to the reception apparatus when the data output control signal indicates the permission of output of the data.

A further aspect of the present invention provides a method for controlling the transmission of data from a transmission apparatus to a reception apparatus. The method includes: comparing first information indicating a free space of a buffer included in the reception apparatus with second information indicating the size of data to be transmitted; comparing the first information with third information obtained by adding a predetermined value to the second information; and outputting a data output control signal based on a comparison result of the first information with the third information after the transmission of the data until the end of update of the first information while outputting a data output control signal based on a comparison result of the first information with the second information after the update of the first information.

The disclosed techniques can prevent deterioration of the latency during data transmission.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

Fig. 1 is a circuit diagram of a credit determining circuit according to a first embodiment;
Fig. 2 is a flow chart illustrating the operation of the credit determining circuit in Fig. 1;
Fig. 3 is a circuit diagram illustrating a communication circuit including the credit determining circuit in Fig. 1 according to the first embodiment;
Fig. 4 is a timing chart illustrating an exemplary operation of the communication circuit in Fig. 3 when the credit is fulfilled;
Fig. 5 is a timing chart illustrating an exemplary operation of the communication circuit in Fig. 3 when the credit is deficient;
Fig. 6 is a circuit diagram of a credit determining circuit according to a second embodiment;
Fig. 7 is a circuit diagram illustrating a communication circuit including the credit determining circuit in Fig. 6 according to the second embodiment;
Fig. 8 is a timing chart illustrating an exemplary operation of the communication circuit in Fig. 7;
Fig. 9 is a circuit diagram illustrating a communication control circuit based on a credit scheme without the credit determining circuit in Fig. 1;
Fig. 10 is a timing chart illustrating an exemplary operation of the communication control circuit in Fig. 9 when the credit is fulfilled; and
Fig. 11 is a timing chart illustrating an exemplary operation of the communication control circuit in Fig. 9 when the credit is deficient.

### DESCRIPTION OF EMBODIMENTS

### (A) Embodiments

Exemplary embodiments will now be described with reference to the accompanying drawings.

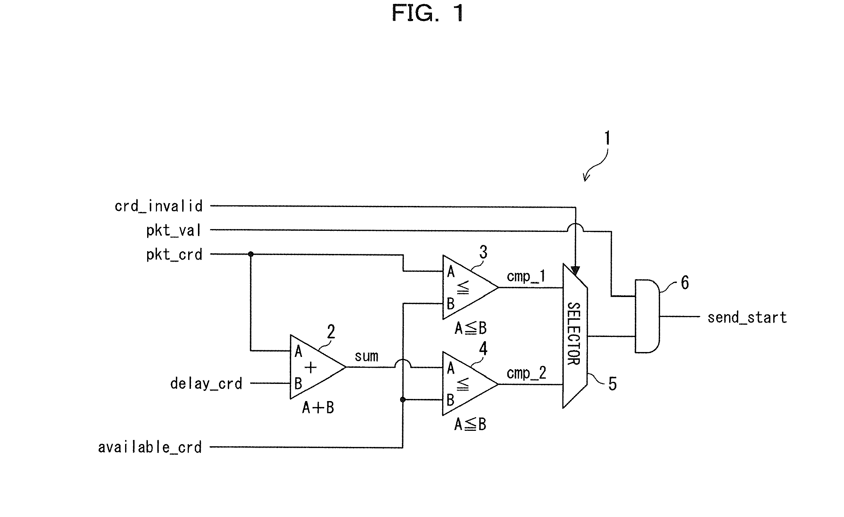

Figs. 1 to 5 illustrate a credit determining circuit (control apparatus) 1 and a communication circuit 10 including the circuit according to a first embodiment.

Fig. 1 is a circuit diagram of the credit determining circuit 1 according to the first embodiment.

The credit determining circuit 1 of Fig. 1 compares a credit value pkt_crd of a packet (data) waiting for transmission with a credit value available_crd indicating the free space of a queue at a transmission destination and determines the permission of transmission. At this time, the credit determining circuit 1 performs two levels of comparisons, i.e., a strict comparison and a rough comparison. As described below, the credit determining circuit 1 transmits packets based on the result of a strict comparison usually and based on the result of a rough comparison immediately after the start of packet transmission until the end of update of the credit value.

As illustrated in Fig. 1, the credit determining circuit 1 includes an adder 2, a comparator (first comparison unit) 3, a comparator (second comparison unit) 4, a selector (control unit) 5, and an AND circuit 6.

The adder 2 receives the credit value pkt_crd indicating the length of the next packet to be transmitted, and a credit value delay_crd indicating the number of cycles required immediately after the start of packet transmission until the end of update of a credit value, and outputs "sum", i.e., the sum of pkt_crd and delay_crd.

The comparator 3 receives the credit value pkt_crd as an input A and the credit value available_crd as an input B indicating the free space of a receiver queue 32 of a circuit downstream of the credit determining circuit 1. The comparator 3 then compares the input A with the input B and outputs cmp_1 = 1 if A ≤ B, i.e., pkt_crd ≤ available_crd. If A > B, i.e., pkt_crd > available_crd, it outputs cmp_1 = 0.

The comparator 4 receives the output of the adder 2 as an input A and the credit value available_crd as an input B. The comparator 4 then compares the input A with the input B and outputs cmp_2 = 1 if A ≤ B, i.e., sum ≤ available_crd. If A > B, i.e., sum > available_crd, it outputs cmp_2 = 0.

The selector 5 receives the output cmp_1 from the comparator 3, the output cmp_2 from the comparator 4, and crd_invalid described below. The selector 5 then outputs cmp_1 if crd_invalid = 0, and outputs cmp_2 if crd_invalid = 1.

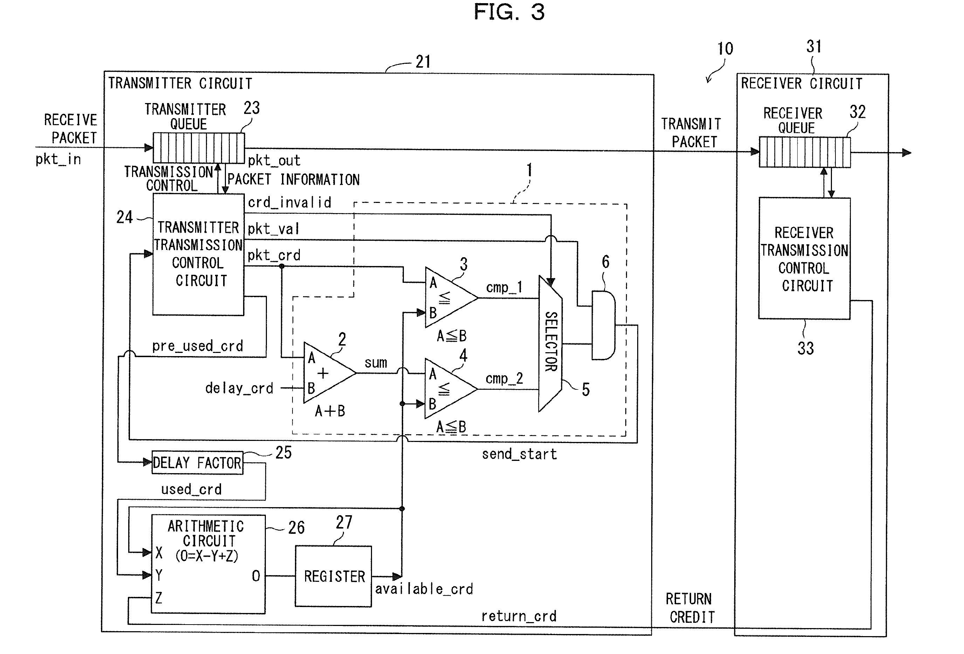

The AND circuit 6 performs the AND operation of the output from a selector 5 and a parameter pkt_val indicating the presence of a packet waiting for transmission in a transmitter queue 23 of a transmitter circuit 21 (refer to Fig. 3) including the credit determining circuit 1, and outputs the calculated value send_start.

The signal pkt_val takes, for example, a value "1" if a packet waits for transmission in the transmitter queue 23, and a value "0" if no packet waits for transmission therein.

That is, if the output of the selector 5 indicates 1 at pkt_val = 1, send_start = 1 is outputted to permit transmission of the packet from the transmitter queue 23. If the output send_start of the AND circuit 6 takes a value "0", the packet is restrained from being transmitted from the transmitter queue 23.

The signal crd_invalid takes a value "1" immediately after the start of packet transmission until the end of update of a credit value.

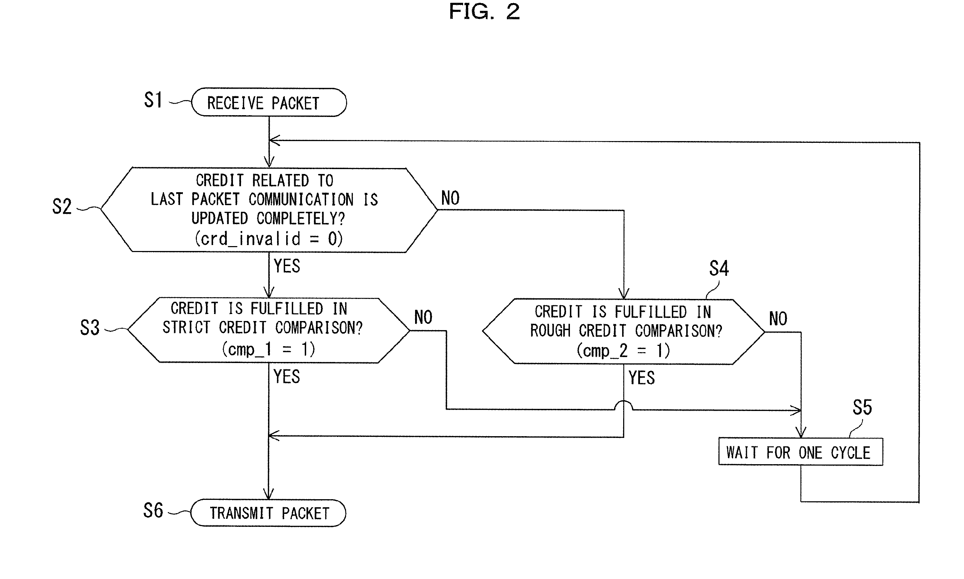

Next, the operation of the credit determining circuit 1 in Fig. 1 will be explained with reference to Fig. 2.

Fig. 2 is a flow chart illustrating the operation of the credit determining circuit 1 in Fig. 1.

In Step S1 the transmitter circuit 21 below described with reference to Fig. 3 receives a packet from a preceding circuit not illustrated in the drawing.

In Step S2, the credit determining circuit 1 in Fig. 1 then determines whether the credit value related to the last packet communication has been updated. More specifically, the credit determining circuit 1 determines whether crd_invalid has a value of 0.

If the credit value related to the last packet communication has been updated (refer to the YES route of Step S2), the credit determining circuit 1 performs a strict comparison on a credit value in Step S3 and determines whether the credit has a fulfilled value. In detail, the credit determining circuit 1 refers to the result (cmp_1 described below) of a strict comparison on the credit value, and determines, for example, that the credit has a fulfilled value if the comparative value indicates 1, and that the credit has a deficient value if the comparative value indicates 0.

If the credit has a fulfilled value as a result of the strict comparison on the credit value (refer to the YES route of Step S3), the credit determining circuit 1 transmits a packet in Step S6.

If the credit has a deficient value as a result of the strict comparison on the credit value (refer to the NO route of Step S3), the credit determining circuits 1 waits for one cycle in Step S5, then returns to the process in Step S2, and restarts the process from the determination whether the credit value is updated completely.

If the credit value has not been updated in Step S2 (refer to the NO route of Step S2), the credit determining circuit 1 performs a rough comparison on the credit value in Step S4, and determines whether the credit has a fulfilled value. In detail, the credit determining circuit 1 refers to the result (cmp_2 described below) of a rough comparison on the credit value, and determines that the credit has a fulfilled value for a comparative value of 1, and that the credit has a deficient value for a comparative value of 0.

If the credit has a fulfilled value as a result of the rough comparison on the credit value (refer to the YES route of Step S4), the credit determining circuit 1 transmits a packet in Step S6.

If the credit has a deficient value as a result of the rough comparison on the credit value (refer to the NO route of Step S4), the credit determining circuits 1 waits for one cycle in Step S5, then returns to the process in Step S2, and restarts the process from a determination whether the credit value is updated completely.

Next, an exemplary communication circuit 10 including the credit determining circuit 1 in Fig. 1 will be described with reference to Fig. 3.

Fig. 3 is a circuit diagram illustrating the communication circuit 10 including the credit determining circuit 1 in Fig. 1 according to the first embodiment.

This communication circuit 10 includes the transmitter circuit (transmission apparatus) 21 and a receiver circuit 31. The transmitter circuit 21 is connected to the receiver circuit 31 via a signal line not illustrated in the drawing.

The transmitter circuit 21 receives a packet from the preceding circuit not illustrated in the drawing and transmits this packet to the receiver circuit 31. In this case, the transmitter circuit 21 and the receiver circuit 31 employ a credit scheme in order to prevent overflow of the receiver queue 32 in the receiver circuit 31.

The transmitter circuit 21 includes the credit determining circuit 1, the transmitter queue (buffer, first buffer) 23, a transmitter transmission control circuit 24, a delay factor 25, an arithmetic circuit 26, and a register 27.

The credit determining circuit 1 has the same configuration and functions as those described with reference to Fig. 1 and Fig. 2. Redundant descriptions thereon will thus be omitted.

The transmitter queue 23 stores a packet pkt_in received from the preceding circuit not illustrated in the drawing and transmits the packet information to the transmitter transmission control circuit 24. The transmitter queue 23 also transmits a packet pkt_out to the receiver communication circuit 31 under control of the transmitter communication control circuit 24 described below.

The transmitter transmission control circuit 24 holds information on the presence of a packet waiting for transmission in the transmitter queue 23 and the length of each packet. The transmitter transmission control circuit 24 outputs pkt_val indicating the presence of a packet waiting for transmission and the credit value pkt_crd indicating the length of the next packet to be transmitted. The transmitter transmission control circuit 24 also controls the transmission from the transmitter queue 23. At this time, the transmitter transmission control circuit 24 outputs pre_used_crd to the delay factor 25 described below.

The delay factor 25 includes various sources of delay in the transmitter circuit 21, for example, due to a long physical distance between the transmitter transmission control circuit 24 and the arithmetic circuit 26 described below. The delay factor 25 is illustrated as a component of the transmitter circuit 21 in Fig. 3. It is, however, not an actual component in the circuit but a schematical component that correctively represents such factors. The delay factor 25 causes a fixed delay value of, for example, 4 cycles. The delay factor 25 outputs pre_used_crd from the transmitter transmission control circuit 24 as used_crd having a delay time of 4 cycles.

The arithmetic circuit 26 manages the credit value available_crd together with the register 27 described below. The arithmetic circuit 26 receives available_crd described below as an input x, used_crd as an input Y, return_crd described below as an input Z indicating a credit value returned to the transmitter circuit 21. The arithmetic circuit 26 then calculates X - Y + Z and outputs a value indicating an available credit value as an output O to the register 27 described below.

The register 27 holds the credit value outputted from the arithmetic circuit 26 and outputs it as available_crd.

On the other hand, the receiver circuit 31 includes the receiver queue (second buffer) 32 and a receiver transmission control circuit 33.

The receiver queue 32 stores a packet pkt_out received from the transmitter circuit and transmits the packet information to the receiver transmission control circuit 33. The receiver queue 32 also transmits a packet to the subsequent circuit not illustrated in the drawing under the control of the receiver transmission control circuit 33 described below.

The receiver transmission control circuit 33 holds information indicating the presence of a packet waiting for transmission in the receiver queue 32, and information on the length of each packet. The receiver transmission control circuit 33 also controls the transmission from the receiver queue 32.

In this communication circuit 10, the transmitter circuit 21 holds a value (credit value) indicating the free space of the receiver queue 32 in the register 27, transmits a packet only if the free space is larger than the packet size, and thereby prevents overflow in the receiver queue 32.

Next, the control in this communication circuit 10 will now be explained.

The packet pkt_in inputted into the transmitter circuit 21 is stored in the transmitter queue 23. At this time, the packet information is sent from the transmitter queue 23 to the transmitter transmission control circuit 24.

The credit determining circuit 1 allows the comparator 3 to compare pkt_crd with the credit value available_crd indicating the free space of the receiver queue 32, and sets cmp_1 = 1 if available_crd ≥ pkt_crd. The credit determining circuit 1 also allows the comparator 4 to compare available_crd with the value "sum" obtained by adding pkt_crd to the credit value delay_crd indicating the number of cycles required immediately after the start of packet transmission until the end of update of a credit value, and sets cmp_2 = 1 if available_crd ≥ sum. The selector 5 receives cmp_1 and cmp_2, and outputs cmp_1 if crd_invalid = 0 and cmp_2 if crd_invalid = 1.

As long as available_crd ≥ cmp_2 is satisfied immediately after the start of packet transmission until the end of update of a credit value, the receiver queue 32 does not overflow even if a packet is transmitted from the transmitter circuit 21 to the receiver circuit 31. This reason will be described below.

If available_crd ≥ pkt_crd is satisfied after a certain packet x is transmitted to completely update the credit value, the receiver queue 32 does not overflow. This indicates the overflow can be prevented if available_crd ≥ pkt_crd + (credit value corresponding to a packet having amaximum length that can be transmitted immediately after the start of transmission of the packet x until the end of update of a credit value), immediately after the start of transmission of the packet x. That is, the minimum requirement is to satisfy the relation: available_crd ≥ pkt_crd + delay_crd.

The transmitter transmission control circuit 24 controls the transmission from the transmitter queue 23 at send_start = 1, and transmits a packet in the transmitter queue 23 to the receiver circuit 31.

As described above, available_crd is managed by the register 27 holding a credit value and the arithmetic circuit 26 performing addition and subtraction of credit values. When a packet is transmitted from the transmitter queue 23 to the receiver circuit 31, i.e., when the free space of the receiver queue 32 in the receiver circuit 31 is decreased, the arithmetic circuit 26 subtracts the credit value used_crd corresponding to the length of the transmitted packet from available_crd. When a packet in the receiver queue 32 is transmitted to the subsequent circuit to increase the free space of the receiver queue 32, the credit value return_crd equivalent to the increased space is returned to the transmitter circuit 21. The arithmetic circuit 26 then adds return_crd to the value of the register 27.

The transmitter transmission control circuit 24 outputs the control signal pre_used__crd to control transmission from transmitter queue 23. The control signal pre_used_crd is outputted as used_crd from the delay factor 25. A period after the input of pre_used_crd until input of it into the register 27 may exceed one cycle due to, for example, the delay factor 25 or a large number of logic states in the arithmetic circuit 26. In such a case, the value of a register 27 does not accurately indicate the free space of the receiver queue 32 within a time period from the start of a transmission control in the transmitter transmission control circuit 24 to the update of the value of the register 27. For this reason, if the transmitter transmission control circuit 24 turns up the value of cmp_1 to determine the transmission of a packet, the receiver queue 32 may cause overflow. In order to prevent the overflow, the transmitter transmission control circuit 24 outputs crd_invalid = 1 and determines the packet transmission with reference to the value of cmp_2, within a time period from immediately after the start of packet transmission to the end of update of a credit value.

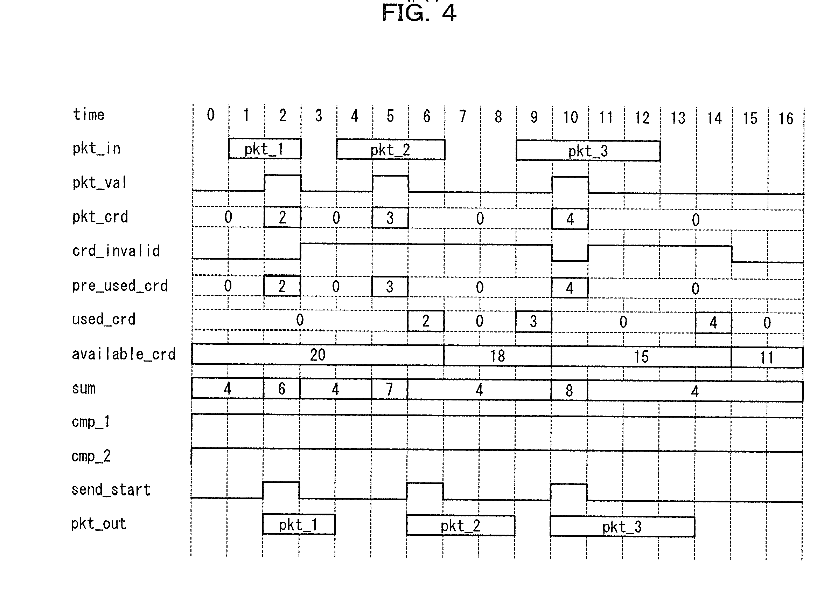

Fig. 4 is a timing chart illustrating an exemplary operation of the communication circuit 10 in Fig. 3 when the credit is fulfilled.

With reference to Fig. 4, a packet pkt_1 first received is inputted to the transmitter queue 23 at time 1. In the following example, a packet corresponding to one cycle has a credit value "1". The delay time from pre_used_crd to used_crd is defined as 4 cycles while the delay time from used_crd to inputting into the register 27 is defined as the same number of cycles. At this time, 4 cycles are required for the delay time from pre_used_crd to input into the register 27. For this reason, crd_invalid is set to "1" during the 4 cycles from the start of packet transmission. In this case, delay_crd is equal to 4.

Packets pkt_2 and pkt_3 are then outputted. After the reception of pkt_2, crd_invalid = 1 is set at time 6. The selector 5 therefore outputs the value cmp_2 to set send_start = 1 and start transmission of the packet pkt_2. After the reception of pkt_3, send_start = 1 is similarly set at time 10 to start the transmission of the packet pkt_3.

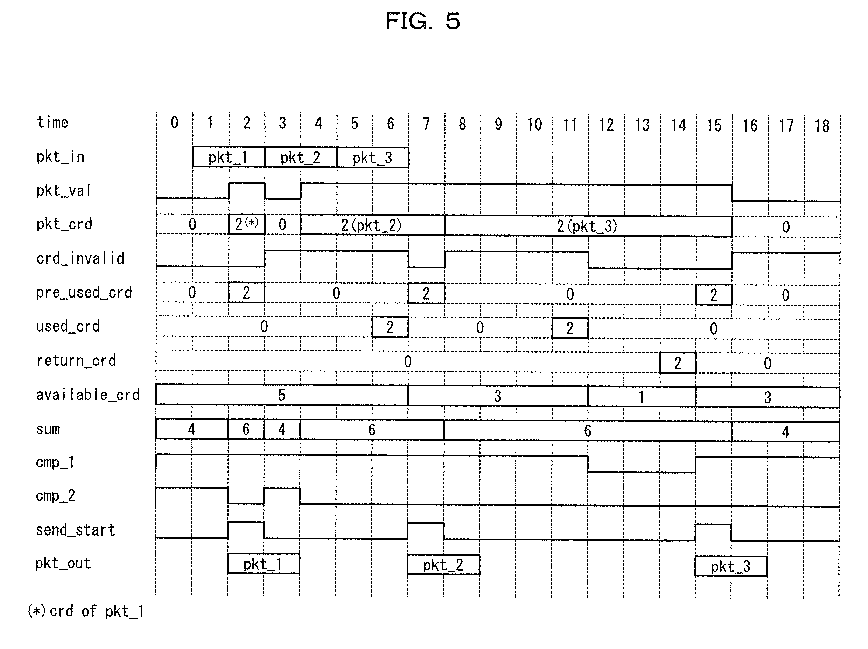

Fig. 5 is a timing chart illustrating an exemplary operation of the communication circuit 10 in Fig. 3 when the credit is deficient.

Immediately before the credit value become deficient, pkt_val = 1 is set at time 4. At this timing, crd_invalid = 1 and cmp_2 = 0 is set to lead to send_start = 0. As a result, the packet pkt_2 is not transmitted yet. Transmission of the packet pkt_2 is started at time 7 as illustrated in Fig. 5. Due to send_start = 0, the transmission of the packet pkt_3 cannot be started at time 9 after the completion of transmission of the packet pkt_2, but is started at time 15.

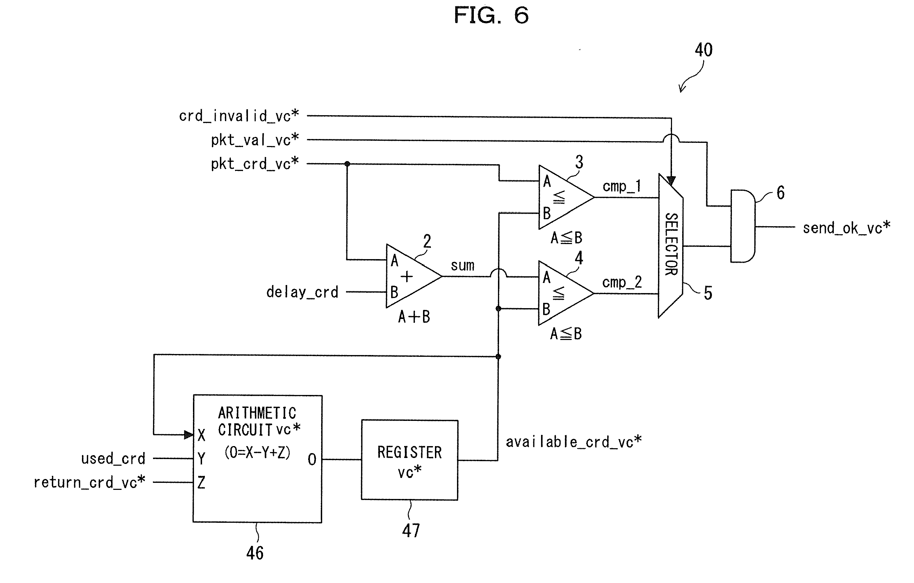

Figs. 6 to 8 illustrate a second embodiment in which the credit determining circuit 1 in Fig. 1 is applied to an XB (crossbar) treating a virtual channel (VC).

Fig. 6 is a circuit diagram of the credit determining circuit 40 according to the second embodiment.

In the following drawings, components designated with identical reference numerals to those described above have the same configurations and functions as those described above. Redundant descriptions thereon will thus be omitted. Signals designated with identical reference signs to those described above also have equivalent functions to those described above. Redundant descriptions thereon will thus be omitted.

In the VC, multiple signal lines are virtually allocated to one physical signal line.

Thus, the credit determining circuit 40 in Fig. 6 and a queue are necessary for each VC in order to perform a flow control independently on each VC.

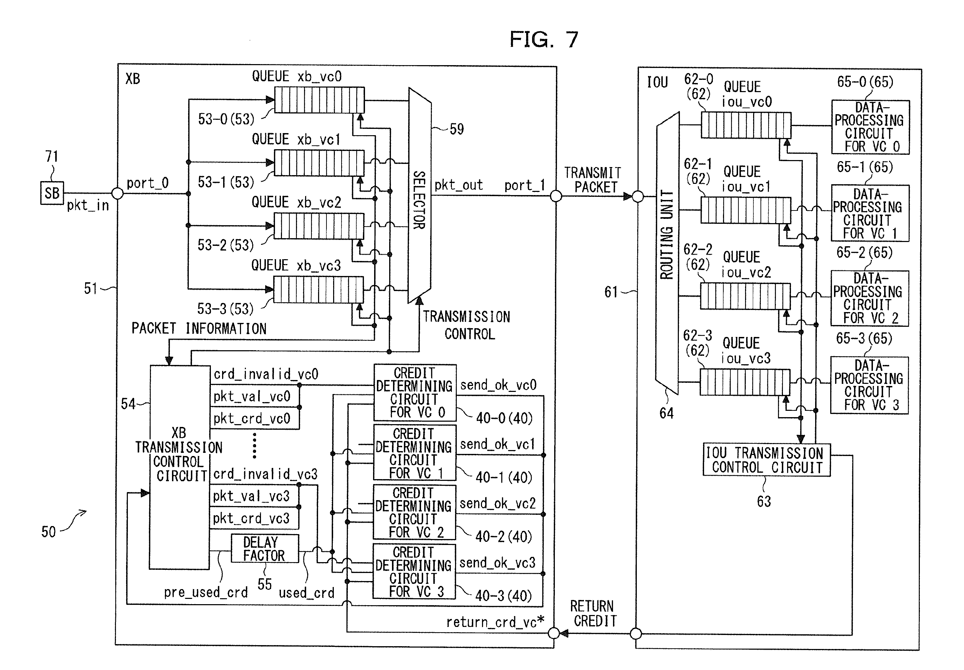

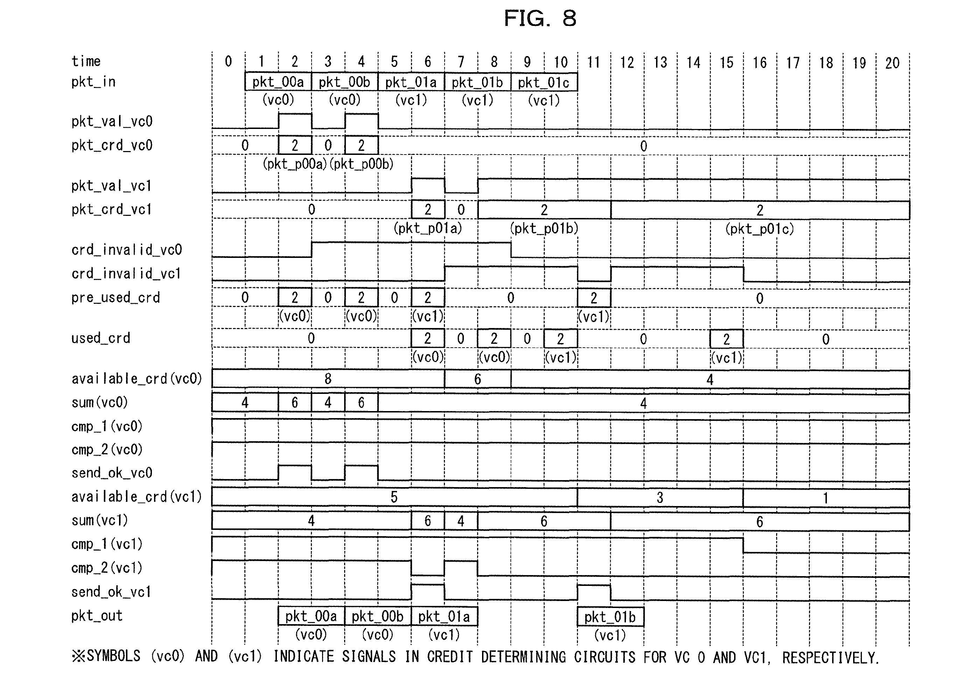

Fig. 7 is a circuit diagram illustrating the communication circuit 50 including the credit determining circuit 40 in Fig. 6 according to the second embodiment. Fig. 8 is a timing chart illustrating an exemplary operation of the communication circuit 50 in Fig. 7.

In the examples in Figs. 7 and 8, four channels VCs 0 to 3 are used while four credit determining circuits 40-0 to 40-3 are provided in place of the credit determining circuit 40 in Fig. 6.

The communication circuit 50 illustrated in Fig. 7 includes an XB 51 and an IO unit (IOU) 61. The XB 51 is connected to the IOU 61 via a signal line not illustrated in the drawing.

The XB 51 is a switching circuit connected to multiple system boards (SBs) 71 or another XB 51, and performs a switching control on data communications between the SBs 71 or between the SB 71 and the IOU 61.

In the example of Fig. 7, the SB 71 transmits a packet belonging to one of the VCs 0 to 3, and then the IOU 61 receives the packet via the XB 51. In this case, the XB 51 and the IOU 61 employs the credit scheme in order to prevent the overflow of the queues 62-0 to 62-3 in the IOU 61.

The XB 51 includes the credit determining circuits 40-0 to 40-3, queues 53-0 to 53-3, an XB transmission control circuit 54, a delay factor 55, and a selector 59.

The credit determining circuit 40-0 and the queue 53-0 are used for the channel VC 0, the credit determining circuit 40-1 and the queue 53-1 for the channel VC 1, the credit determining circuit 4 0-2 and the queue 53-2 for channel the VC 2, and the credit determining circuit 40-3 and the queue 53-3 for channels VC 3.

Hereafter, one of the signs 40-0 to 40-3 is used when one of the multiple credit determining circuits in the XB 51 is specified, whereas the sign 40 is used when any one of the credit determining circuits is indicated.

Similarly, one of the signs 53-0 to 53-3 is used when one of the multiple queues in the XB 51 is specified, whereas the sign 53 is used when any one of the queues is indicated.

The credit determining circuit 40 has a configuration illustrated in Fig. 6.

In Figs. 6 to 8 and the following explanation, the mark "*" at the end of each signal indicating a signal and a component indicates one of "0" to "3." In detail, "0" corresponds to the channel VC 0, "1" to the channel VC 1, "2" to the channel VC 2, and "3" to the channel VC 3.

The credit determining circuit 40 in Fig. 6 has a similar configuration to the credit determining circuit 1 in Fig. 1 and further includes an arithmetic circuit 46 and a register 47. The arithmetic circuit 46 and the register 47 have the same configuration and function as the arithmetic circuit 26 and the register 27, respectively, of the communication circuit 10 in Fig. 3.

The XB transmission control circuit 54 holds information on the presence of packets waiting for transmission in the queues 53-0 to 53-3 and on the length of each packet. The XB transmission control circuit 54 outputs pkt_val_vc0 to pkt_val_vc3 indicating the presence of the packets waiting for transmission, and credit values pkt_crd_vc0 to pkt_crd_vc3 indicating the lengths of the next packets to be transmitted. The XB transmitter transmission control circuit 54 also controls the transmission from the queues 53-0 to 53-3. At this time, the XB transmission control circuit 54 outputs pre_used_crd to the delay factor 55.

The selector 59 selects one of the queues 53-0 to 53-3 as a queue transmitting a packet under control by the XB transmission control circuit 54.

Other components of the credit determining circuit 40 in Fig. 7 are the same as the respective components in the first embodiment. Redundant detailed descriptions thereon will thus be omitted.

On the other hand, the IOU 61 includes queues 62-0 to 62-3, an IOU transmission control circuit 63, a routing unit 64, and data-processing circuits 65-0 to 65-3.

The queue 62-0 and the data-processing circuit 65-0 are used for the channel VC 0, the queue 62-1 and the data-processing circuit 65-1 for the channel VC 1, the queue 62-2 and the data-processing circuit 65-2 for the channel VC 2, the queue 62-3 and the data-processing circuit 65-3 for the channel VC 3. The other components have the same configurations and functions as those of the communication circuit 10 illustrated in Fig. 3. Redundant descriptions thereon will thus be omitted.

Hereafter, one of the signs 62-0 to 63-3 is used when one of the multiple queues in the IOU 61 is specified, whereas the sign 62 is used when any one of the queues is indicated.

Similarly, one of the signs 65-0 to 65-3 is used when one of the multiple data-processing circuits in the IOU 61 is specified, whereas the sign 65 is used when any one of the data-processing circuits is indicated.

The routing section 64 assigns a packet to one of the queues 62-0 to 62-3 in response to the virtual channel for the packet received from XB 51.

The IOU transmission control circuit 63 holds information on the presence of packets waiting for transmission in the queues 62-0 to 62-3, and on the of each packet. The IOU transmission control circuit 63 outputs return_crd_vc0 to return_crd_vc3 to the XB 51 if the respective data-processing circuits 65-0 to 65-3 read the data from the queues 62-0 to 62-3, respectively.

The data-processing circuits 65-0 to 65-3 read packets from the queues 62-0 to 62-3, respectively, and process the packets.

The control in the communication circuit 50 will now be explained.

A packet pkt_in transmitted from the SB 71 is inputted into the XB 51, is stored in one of the queues 53-0 to 53-3 depending on a VC to which the packet belongs, and is set as a packet waiting for transmission. At this time, packet information is sent from the queues 53-0 to 53-3 storing the packet to the XB transmission control circuit 54.

The XB transmission control circuit 54 holds information on the presence of packets waiting for transmission in the queues 53-0 to 53-3, and on the length of each packet. The XB transmission control circuit 54 outputs pkt_val_vc0 to pkt_val_vc3 indicating that packets wait for transmission in the respective queues, and credit values pkt_crd_vc0 to pkt_crd_vc3 indicating the lengths of the next packets to be transmitted in the respective queues.

The credit determining circuits 40-0 to 40-3 receive pkt_val_vc0 to pkt_val_vc3 and pkt_crd_vc0 to pkt_crd_vc3, respectively. The credit determining circuits 40-0 to 40-3 hold values (transmission credit values) available_crd_vc0 to available_crd_vc3 indicating the free spaces of the queues 62-0 to 62-3, respectively, in the IOU 61. The credit determining circuits 40-0 to 40-3 determine whether the packets in the VCs can be sent on the basis of these values, pkt_val_vc0 to pkt_val_vc3, and pkt_crd_vc0 to pkt_crd_vc3, respectively. If the packets can be sent, the circuits output signals send_ok_vc0 to send_ok_vc3 = 1 indicating that the packets can be sent, respectively.

The XB transmission control circuit 54 selects one of the VCs satisfying send_ok_vc0 to send_ok_vc3 = 1, controls the transmission from the queues 53-0 to 53-3 and the selector 59, and transmits a packet to the IOU 61 via port_1.

When the IOU 61 receives a packet, the routing unit 64 assigns a packet on the basis of VC information in the packet to store the packet in one of the queues 62-0 to 62-3. At this time, the free spaces of the respective queues 62-0 to 62-3 in the IOU 61 are decreased. Hence, the credit value used_crd corresponding to the length of the transmitted packet must be subtracted from available_crd. The XB transmission control circuit 54 thus transmits used_crd to the credit determining circuits 40-0 to 40-3. The value of used_crd is then subtracted from available_crd_vc*.

After packets are stored in the queues 62-0 to 62-3 in the IOU 61, the data-processing circuits 65-0 to 65-3 read the packets in the queues 62-0 to 62-3, respectively, for data processing. At this time, the free spaces of the queues increase. Hence, credit values corresponding to increases in the free spaces of the queues in the IOU 61 must be added to available_crd in the respective credit determining circuits 40-0 to 40-3 of the XB 51. The IOU transmission control circuit 63 in the IOU 61 thus outputs credit values corresponding to the increases, as return_crd_vc*. The values are then added to available_crd_vc* in the respective credit determining circuits 40-0 to 40-3 of the XB 51.

The credit determining circuits 40-0 to 40-3 determines the permission of packet transmission based on a strict comparison on the credit value usually and a rough comparison on the credit value immediately after the start of packet transmission until the end of update of the credit value.

As illustrated in Fig. 6, the comparator 3 compares available_crd_vc* with pkt_crd_vc* on a strict comparison and sets cmp_1 = 1 at available_crd_vc* ≥ pkt_crd_vc*.

In a rough comparison, the comparator 4 compares available_crd_vc* with the value "sum" obtained by adding pkt_crd_vc* to the credit value delay_crd indicating the number of cycles required immediately after the start of packet transmission until the end of update of a credit value, and sets cmp_2 = 1 if available_crd_vc* ≥ sum. The selector 5 receives cmp_1 and cmp_2, and outputs cmp_1 at crd_invalid = 0 and cmp_2 at crd_invalid_vc* = 1.

The AND circuit 6 outputs send_ok_vc* = 1 if the selector 5 outputs a value "1" at pkt_val_vc* = 1. The parameter crd_invalid_vc* is set as "1" immediately after the start of packet transmission until the end of update of a credit value in the corresponding VC.

Fig. 8 illustrates an exemplary operation of the communication circuit 50 in Fig. 7.

Fig. 8 is a timing chart illustrating the exemplary operation of the communication circuit 50.

This example also uses a packet corresponding to one cycle having a credit value "1" and delay_crd = 4. This example describes two packets inputted via the VC 0 and three packets inputted via the VC 1. Signals via the VC 2 and VC 3 are thus omitted.

After the reception of packet pkt_00a (VC 0), crd_invalid_vc0 = 0 and cmp_1 (VC 0) = 1 (that is, available_crd_vc0 ≥ pkt_crd_vc0) are set at time 2 to therefore set send_ok_vc0 = 1 and start the transmission of pkt_00a.

Due to crd_invalid_vc0 = 1 and cmp_2 (VC 0) = 1 (that is, available_crd_vc0 ≥ pkt_crd_vc0 + delay_crd) at time 4 immediately after the completion of transmission of pkt_00a, send_ok_vc0 = 1 is outputted to start the transmission of pkt_00b.

Although pkt_01a (VC 1) is transmitted similarly, crd_invalid_vc1 = 1 and cmp_2 (VC 1) = 1 are outputted at time 8 after the completion of transmission of pkt_01a not to start the transmission of pkt_01b waiting for transmission.

At time 11, crd_invalid_vc1 = 0 is then outputted to start the transmission of pkt_01b. Subsequently to time 13 after the completion of transmission of pkt_01b, pkt_01c remains as a packet waiting for transmission, and is not transmitted until time 20 illustrated in Fig. 8 since the credit value does not satisfy the condition.

### (B) Advantageous effects

According to each of the first and second embodiments of the present invention, the credit determining circuit and communication circuit switch between strict and rough comparisons on credit values to determine the permission of packet transmission. This reduces deterioration of latency during continuous transmission of short packets.

A communication circuit 110 will now be described which does not include the credit determining circuit 1 in the first embodiment, for comparison.

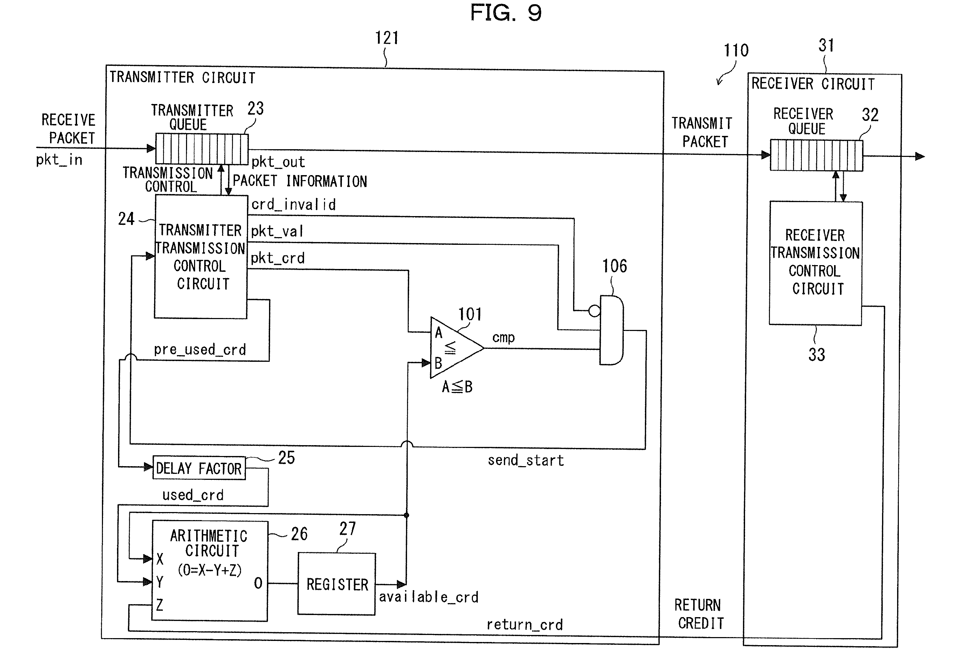

Fig. 9 is a circuit diagram illustrating the communication circuit 110 without the credit determining circuit 1 in Fig. 1.

This communication circuit 110 includes a transmitter circuit 121 and a receiver circuit 31. The transmitter circuit 121 is connected to the receiver circuit 31 via a signal line not illustrated in the drawing.

The transmitter circuit 121 receives a packet from the preceding circuit not illustrated in the drawing and transmits this packet to the receiver circuit 31. In this case, the transmitter circuit 121 and the receiver circuit 31 employ a credit scheme in order to prevent overflow of the receiver queue 32 in the receiver circuit 31.

The transmitter circuit 121 includes a comparator 101, an AND circuit 106, a transmitter queue 23, a transmitter transmission control circuit 24, a delay factor 25, an arithmetic circuit 26, and a register 27.

The comparator 101 compares pkt_crd with the credit value available_crd indicating the free space of the receiver queue 32, and sets cmp_1 = 1 if available_crd ≥ pkt_crd.

The AND circuit 106 performs the AND operation of the turnover value of crd_invalid and pkt_val from the transmitter transmitting control circuit 24 and cmp, and outputs the resultant value as send_start.

Other various components in the transmitter circuit 121 and the receiver circuit 31 have the same configurations and functions as those explained with reference to Fig. 3. Redundant descriptions thereon will thus be omitted.

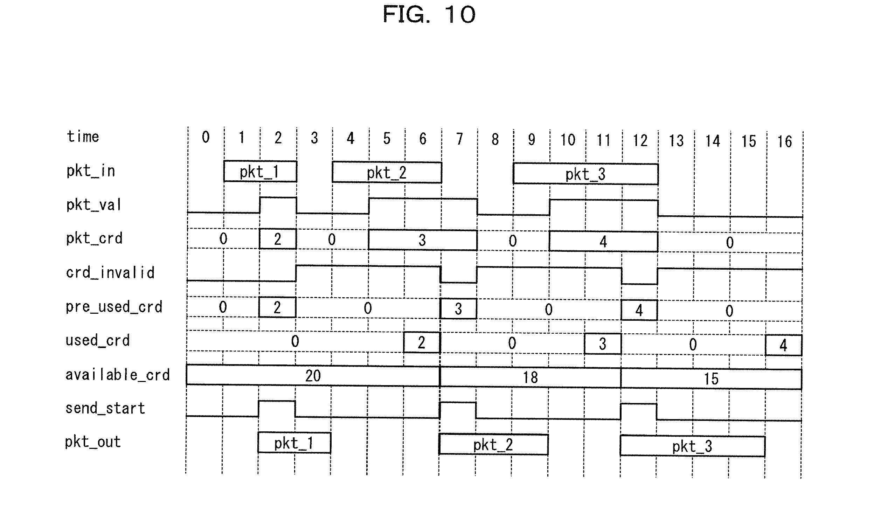

Fig. 10 is a timing chart illustrating an exemplary operation of the communication circuit 110 in Fig. 9 when the credit is fulfilled. Fig. 10 illustrates an example of packets pkt_1 to pkt_3 inputted into the communication circuit 110 at the same timing as that in Fig. 4.

With reference to Fig. 10, the packet pkt_1 that is first received is inputted into the transmitter queue 23 at time 1. Also in the following example, a packet corresponding to one cycle has a credit value "1". The delay time from pre_used_crd to used_crd is defined as 4 cycles while the delay time from used_crd to inputting into the register 27 is defined as the same number of cycles. At this time, 4 cycles are required for the delay time from pre_used_crd to input into the register 27. For this reason, crd_invalid is set to "1" during the 4 cycles from the start of packet transmission. In this case, delay_crd is equal to 4.

With reference to Fig. 10, the transmitter circuit 121 receives three packets packet pkt_1, pkt_2, and pkt_3. Due to available_crd ≥ pkt_crd and pkt_val = 1 at time 2 after the reception of the packet pkt_1, send_start = 1 is outputted to start the transmission of the packet pkt_1.

Due to pkt_val = 1 and available_crd ≥ pkt_crd but crd_invalid = 1 at time 5 after the reception of the packet pkt_2, send_start = 0 is maintained not to transmit the packet pkt_2.

At time 7, crd_invalid = 0 is outputted to thus start the transmission of the packet pkt_2. Similarly, the transmission of the packet pkt_3 does not start due to crd_invalid = 1 at time 10 but starts at time 12. In contrast, the communication circuit 10 in Fig. 4 according to the first embodiment starts the transmission of the packet pkt_3 at time 10.

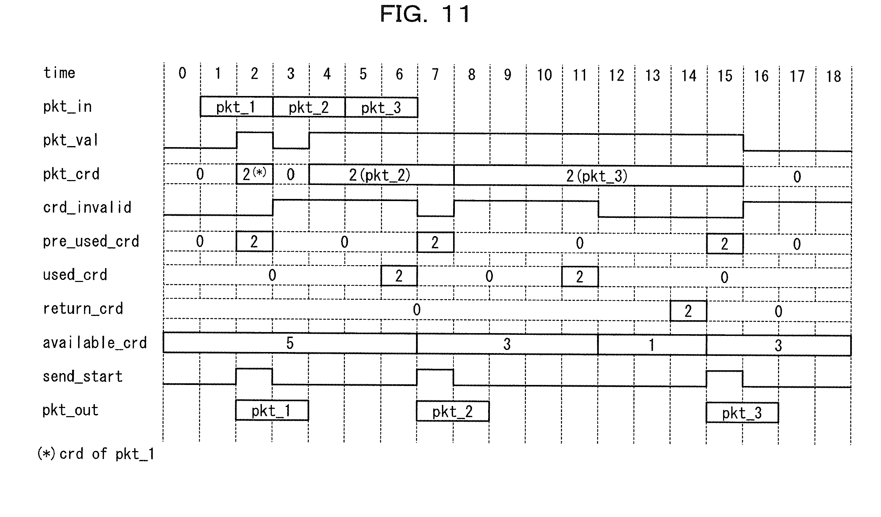

Fig. 11 is a timing chart illustrating an exemplary operation of the communication circuit 110 in Fig. 9 when the credit is deficient. Fig. 11 illustrates an example of packets pkt_1 to pkt_3 inputted into the communication circuit 110 at the same timing as that in Fig. 5.

When pkt_val = 1 and crd_invalid = 0 are outputted at time 12 after input and output of the packets pkt_1 and pkt_2, the credit is deficient due to available_crd < pkt_crd to disable the output of the packet pkt_3. A credit value return_crd is then returned at time 14 to start the transmission of the packet pkt_3 due to available_crd ≥ pkt_crd at time 15.

As described above, the circuit in Fig. 9 cannot prevent deterioration of latency occurring when a time required for update of the credit value is longer than the packet length as illustrated in Fig. 10.

As described above, when the communication circuit 110 based on a credit scheme has a delay immediately after the start of packet transmission until the end of update of a credit value, the communication circuit 110 in Fig. 9 reduces packet transmission immediately after the start of packet transmission until the end of update of a credit value in order to prevent overflow of a circuit in a transmission destination. This deteriorates the latency during continuous transmission of short packets.

In contrast, the credit determining circuits 1 and 40 according to the first and second embodiments switch between strict and rough comparisons on credit values to determine the permission of packet transmission. The credit determining circuits 1 and 40 transmits packets based on a result of a strict comparison usually and based on a result of a rough comparison immediately after the start of packet transmission until the end of update of the credit value.

This can minimize the dead period on packet transmission even in the continuance of short packets. This can prevent deterioration of latency during transmission of a packet.

Moreover, the output signal crd_invalid from the transmitter transmitting control circuit 24 can be used as a selector signal for the selector 5 of the credit determining circuits 1 and 40. This can eliminate a change in an existing transmitter transmitting control circuit 24, can reduce the production and development costs, and can simplify the circuit configuration.

### (C) Others

The disclosed techniques are not limited to the first and second embodiments and can be implemented by various modifications or variations without departing from the scope and spirit of these embodiments.

All examples and conditional language recited herein are intended for the pedagogical purposes of aiding the reader in understanding the invention and the concepts contributed by the inventor to further the art, and are not to be construed limitations to such specifically recited examples and conditions, nor does the organization of such examples in the specification relate to a showing of the superiority and inferiority of the invention. Although one or more embodiments of the present inventions have been described in detail, it should be understood that the various changes, substitutions, and alterations could be made hereto without departing from the spirit and scope of the invention.

## Claims

1. A control apparatus (1) for controlling the transmission of data from a transmission apparatus (21) to a reception apparatus (31), comprising:
a first comparison unit (3) that compares first information indicating a free space of a buffer (23) included in the reception apparatus (31) with second information indicating the size of data to be transmitted;
a second comparison unit (4) that compares the first information with third information obtained by adding a predetermined value to the second information; and
a control unit (5) that outputs a data output control signal based on a comparison result from the second comparison unit (4) after the transmission of the data until the end of update of the first information, and outputs a data output control signal based on a comparison result from the first comparison unit (3) after the update of the first information.

2. The control apparatus (1) according to claim 1, wherein the control unit (5) switches between the first comparison unit (3) and the second comparison unit (4) on the basis of a control signal outputted after the transmission of the data until the end of update of the first information.

3. The control apparatus (1) according to either claim 1 or 2, wherein the predetermined value corresponds to an output period for the control signal.

4. A transmission apparatus (21) for transmitting data to a reception apparatus (31), comprising:
a first buffer (32) that stores data to be transmitted to the reception apparatus (31);
a first comparison unit (3) that compares first information indicating a free space of a second buffer (32) included in the reception apparatus (31) with second information indicating the size of the data to be transmitted;
a second comparison unit (4) that compares the first information with third information obtained by adding a predetermined value to the second information; and
a control unit (5) that outputs a data output control signal based on a comparison result from the second comparison unit (4) after the transmission of the data until the end of update of the first information, and outputs a data output control signal based on a comparison result from the first comparison unit (3) after the update of the first information, wherein
the first buffer (32) transmits the data stored in the first buffer (32) to the reception apparatus (31) when the data output control signal indicates the permission of output of the data.

5. The transmission apparatus (21) according to claim 4, wherein the control unit (5) switches between the first comparison unit (3) and the second comparison unit (4) on the basis of a control signal outputted after the transmission of the data until the end of update of the first information.

6. The transmission apparatus (21) according to either claim 4 or 5, wherein the predetermined value corresponds to an output period for the control signal.

7. A method for controlling the transmission of data from a transmission apparatus (21) to a reception apparatus (31), comprising:
comparing first information indicating a free space of a buffer (23) included in the reception apparatus (31) with second information indicating the size of data to be transmitted;
comparing the first information with third information obtained by adding a predetermined value to the second information; and
outputting a data output control signal based on a comparison result of the first information with the third information after the transmission of the data until the end of update of the first information while outputting a data output control signal based on a comparison result of the first information with the second information after the update of the first information.

8. The method according to claim 7, wherein the method switches between the comparison result of the first information with the third information and the comparison result of the first information with the second information on the basis of a control signal outputted after the transmission of the data until the end of update of the first information.

9. The method according to either claim 7 or 8, wherein the predetermined value corresponds to an output period for the control signal.
